# EUROPEAN PATENT APPLICATION

(11) **EP 0 776 747 A2**
(43) Date of publication of application: **04.06.1997**
(21) Application number: 96118860.4
(22) Date of filing: 26.11.1996
(51) Int. Cl.: B29C 37/00, B29C 39/12

(54) **Process for preparing colour contrasts on articles obtained by molding from polymerizable compositions**

(30) Priority: 30.11.1995 IT MI952513
(71) Applicant: ATOHAAS HOLDING C.V., 2034 MB Haarlem (NL)
(72) Inventor: Marciandi, Franco, Rho, Milano (IT); Bertani, Marco, Rho, Milano (IT); Zanzottera, Giorgio, Nerviano, Milano (IT)
(74) Representative: Sama, Daniele, Dr.

(57) **Abstract**

Molding process of articles having colour contrast areas on the surface comprising coating the surface with a colored composition polymerized before filling the mold with a polymerizable fluid composition wherein the colored composition is a fluid, stable and redispersable dispersion, comprising:
a) polymerizable liquid monomers, optionally in admixture with a non-polymerizable volatile organic solvent, as a solvent;
b) from 0.1 to 10% by weight of a colouring composition as inorganic pigment or from 0.0001 to 1% by weight of a pigment or organic dye;
c) from 1 to 30% by weight of an urethane modified alkyd resin or urethane oil soluble in solvent a) wherein the alkyd resin has un unsaturation of the fatty acid measured as iodine value higher than or equal to 50; and the coloured composition is supported with the polymerization initiator of radical type and aged for at least 10',
the component a) being at least 20% by weight of the total composition.

## Description

The present invention relates to a process for obtaining a colour contrast on a molded article surface and to the paint composition for obtaining the colour contrast.

More particularly the composition containing the colour is applied in a specific area of the mold surface where the article is to be formed by using a polymerizable composition.

It is known in the art that by molding techniques it is possible to obtain articles having a high surface finishing by using dispersions of a filler in a polymerizable liquid.

These polymerizable compositions are well known in the art and are fluid dispersions formed by polymerizable monomers based on methylmethacrylate containing high amounts of filler. See for instance **European patent 321193**, or **US Patent 3,324,074**, wherein the dispersions are obtained by using as a dispersant a silane monomer.

Other types of compositions are known wherein a polymeric dispersant is used for obtaining dispersions, (see for instance **GB Patent 1,493,393**).

The feature of the dispersions obtained according to the above patents resides in that, though they contain a high amount of mineral filler, they are stably deflocculated or easily redispersable in the polymerizable monomer contained therein when the filler sedimentation occurs.

These compositions are utilized to form molded articles such as sanitary articles in general, endowed with the essential feature of having a high finishing surface.

It is also known to supply finished surfaces of molded articles having a colour contrast on the item surface.

The problems in this type of colour contrasts are that the pigmented composition when applied on the mold must not be washed away at the time of the injection of the polymerizable composition which has to form the finished item.

The finished item with colour contrast must have uniform colouring on the colored surface, exactly reproducing the imprint previously put on the mold, i.e. it must not show areas wherein the colour is absent or others wherein the colour has a different shade.

The methods known in the art to obtain the colour contrast are represented by **EP Patents 61245 and 217544**.

In EP 61245 the composition for the colour contrast requires, as an essential element, to contain a mixture of a finely subdivided filler, such as silica. In the patent it is shown with comparative examples that if the filler, for instance silica, is not present, it is not possible to obtain an homogeneous colour contrast, but surfaces are obtained wherein colour variations and dishomogeneities appear.
From the industrial point of view the products obtained in absence of silica have no utility.

In EP patent 217544, compared with EP 61245, are described compositions which would represent an improvement of the previous patent described above and in particular would avoid any possibility to obtain dishomogeneous surfaces. The colour contrast compositions are characterized in that they contain as an essential element a siccative alkyd resin and that the presence of silica for obtaining an homogeneous colored surface is no longer necessary, the silica being an optional component.

Tests carried out by the Applicant have shown that many kinds of paints indicated as suitable in the two patents are not capable of supplying homogeneous surfaces which can have an industrial utility even in the presence of silica mineral filler. Moreover, also the resins giving the most homogeneous surfaces show superficial defects in the point wherein the polymerizable composition is injected.

The technical problems posed on the above mentioned patent applications have not yet found, therefore, a satisfactory technical solution.

In a previous patent application of the Applicant, see **European patent application No. 95108221.3**, colored compositions have been described to be utilized in the colour contrast techniques indicated above, allowing to obtain homogeneous surfaces also in the injection point of the polymerizable composition, which comprised as essential component a particular type of polymer as film-forming agent formed by an unsaturated polyester resin.

The Applicant has unexpectedly and surprisingly found another specific kind of polymer as film-forming agent, as essential component of the colored composition, to obtain colour contrasts with homogeneous surfaces also in the injection point of the fluid polymerizable composition.

Object of the present invention is a molding process of articles having areas of colour contrast on the surface comprising the coating of the surface or of part of the surface of the mold with a colored composition polymerized before filling the mold with a polymerizable fluid composition wherein the colored composition is a fluid, stable and redispersable dispersion, which comprises:
a) polymerizable liquid monomers, optionally in admixture with a non-polymerizable volatile organic solvent, as a solvent;
b) from 0.1 to 10% by weight of a colouring composition as inorganic pigment or from 0.0001 to 1% by weight of a pigment or organic dye;
c) from 1 to 30% by weight of an urethane modified alkyd resin or urethane oil soluble in solvent a) wherein the alkyd resin has un unsaturation of the fatty acid measured as iodine value higher than or equal to 50; and the coloured composition is added with the polymerization initiator of radical type and aged for at least 10', preferably for at least 15' before being sprayed on the mold,
optionally comprising one or more of the following components:
d) from 5 to 70% by weight on the total composition of a finely subdivided filler, having an average diameter from 0.5 to 10 micron, preferably from 2 to 6 micron;
e) a polymeric viscosity regulator soluble in the solvent a) in concentrations from 0.1 to 20% by weight,
f) other polymeric or non polymeric additives, in amounts < 5% by weight on the total of the components, acting as dispersants of the filler d), diluents, latent solvents, polymerization inhibitors, molecular weight regulators, polymerization activators, surfactants, film-forming agents; crosslinking agents; the component a) being at least 20% by weight of the total composition.

Tests carried out by the Applicant have shown that in an industrial process it is essential to age the coloured dispersion with the polymerization radical initiator in order to reduce defective items. Indeed without ageing, the washing away of the paint takes place near the paint injection zone.

The components used in paints and in dispersions well known to the skilled in the art are obviously utilizable.

It is preferable that inorganic fillers are present to obtain a reduction of shrinkage phenomena during polymerization of the polymerizable composition to obtain the finished article and to increase the surface hardness of the painted object.

In the preferred compositions the components vary in the following ranges:
a) from 30 to 60% by weight;
b) from 2 to 6% by weight in case of inorganic pigments and from 0.01 to 0.5% by weight in case of organic pigments;
c) from 1.5 to 10% by weight. For the optional components the preferred ranges are:
d) from 20 to 50% by weight;
e) from 1 to 10% by weight.

According to the present invention by filler it is meant an insoluble reinforcing substance added to the pigmented composition to confer mechanical properties to the colored surface without having any relevant effect on the colour.

Both organic and inorganic pigments which can be used are those known in the art. The dispersion of such pigments may be favoured by the presence of small amounts of surfactants, for instance of alkylphenolethoxylates, polyglycols, stearates, etc.

Also the reinforcing fillers which may be used are well known and are described for instance in a previous patent application EP 321193 of the Applicant, in particular the sizes must be in a range lower than 20 micron, with an average diameter between 0.5 and 10 micron, preferably from 2 to 6 micron.

The urethane modified alkyd resins, wherein the alkyd resin has an unsaturation of the fatty acid measured as a iodine value higher than or equal to 50, are well known in the art. They are oil-modified siccative alkyd resins obtained by reaction of at least three components: a dibasic acid, a polyfunctional alcohol and a siccative oil based on fatty acids or a siccative oil containing alcoholic groups. The reaction of esterification of the siccative oil containing fatty acids is effected with the other two reactants, or the siccative oil is first alcoholized with polyhydroxyl alcohol and then esterified with the dibasic acid. There can be present modifying agents in the reaction mass as monocarboxylic acids or phenolic resins. The number average molecular weight of these alkyd resins is comprised between 800 and 6000, preferably 1000-5000. The acid siccative oils are of natural vegetable origin, oils of various kinds of seeds. The unsaturated acids of these oils can be conjugated or not and are utilized as monomers, dimers or trimers.

As said the value of the acids must be at least equal to 50, preferably from 100 to 250. It can reach however also higher values. Examples of said acids are: linoleic, linolenic, abietic acids. Mixtures of said acids can also be used. The preferred polyfunctional alcohols are polyols from 2 to 12 carbon atoms containing from 2 to 8 hydroxyls. It can be mentioned ethylenglycol, propylenglycol, glicerine, pentaerythrol, etc. or their blends. The dibasic acids are for instance the phthalic, isophthalic, terephthalic, adipic acid, saturated dicarboxylic acids, for instance C₄-C₁₄.

The urethane modified alkyd resins are obtained by reaction of the alkyd resins with compounds containing isocyanic groups so as to form urethane -NH-CO- groups in the chain by reaction with the residual OH groups of the alkyd resins. If difunctional isocyanates are used, tridimensional urethane modified alkyd resins having high molecular weight are obtained. In practice an urethane resin compared with an alkyd resin employs diisocyanates compounds which replace part of acids compounds. In the preparation of urethane modified alkyd resins it is necessary to pay attention to the fact that the reactor is well drained and free from polluting agents, that the starting compounds are of high purity to avoid secondary reactions, considering the high reactivity of isocyanates. Among the isocyanates to be utilized, di-isocyanate tolylene (TDI), commercially well known, generally as mixtures 80/20 of the isomer 2,4 (80%) and of the isomer 2,6 (20%), can be mentioned.

Tests carried out by the Applicant have shown that the results of the present invention are obtained by utilizing long oil (oil length of about 65-70%), medium oil (50-60%), or short oil (40-45%) urethane modified alkyd resins, provided that the unsaturations of the fatty acid measured as iodine value are at least of 50. Preferably the invention resins are long and medium oil resins. In practice it is necessary that the alkyd urethane resins quickly dry in the air.

This can be obtained by acting both on the nature of the resin, increasing the number of double bonds, preferably conjugated, both by adding polymerization activators, preferably in combination with each other, in order to assure both a surface and in bulk hardening of the resin.

The activators are defined further on.

Preferably the oil length ranges from 40 to 70% and the unsaturation of the fatty acid measured as iodine value is higher than 100.

The urethane modified alkyd resins of the present invention can be used as such or in admixture with alkyd resins quickly drying in the air, i.e. having a value of the fatty acid unsaturation of at least 50, preferably higher than 100, more preferably from 130-220, measured as iodine value and an oil length such as to obtain an alkyd resin quickly drying in the air, generally with oil length preferably comprised between 40 and 60% by weight.

The urethane modified alkyd resins as defined above, according to the present invention, comprise also the urethane oils which are prepared by transesterification of drying oils (siccative oils) with polyoils and subsequent reaction with a diisocyanate. In this reaction no dibasic acid is used.

The component a) of the polymerizable monomer type is indicated hereafter. As already said, a) can be used also in admixture with a non-polymerizable solvent. This latter must be sufficiently volatile to be removed for the most part before introducing the hardenable composition; in any case it must be a solvent for the urethane modified alkyd resin.

Examples of non-polymerizable solvents are aromatic hydrocarbons, ketones, saturated esters, ethers, etc.

The polymeric viscosity regulator component is a pre-formed polymer and is compatible with the polymer obtained by polymerization of component a), and yet such as not to significantly reduce the physical properties of the colored coating. Well known examples of polymers utilized for the viscosity variation also when employed in small amounts, at most up to 20% by weight with respect to monomer a), more preferably from 1 to 10%, are homopolymers or copolymers of methylmethacrylate with other comonomers, in amounts up to 40% by weight, preferably up to 10% by weight. For instance they are polymethylmethacrylate, methylmethacrylate/methyl or ethyl acrylate copolymers, methylmethacrylate/styrene copolymers.

They have generally average molecular weight comprised between 10,000 and 1,000,000, preferably betwen 20,000 and 100,000.

The additives f) comprise additives of common use in the technique of paints dispersions. For instance polymeric or non polymeric dispersants of the dye and of the filler d), when present. As polymeric dispersants can for instance be mentioned: methylmethacrylate/methacrylic acid copolymers, methylmethacrylate/alkoxy silanes copolymers containing double bonds, for instance, gamma-methacryloxypropyltrimethoxysilane (A 174), etc. As non polymeric dispersants, alkoxy silanes, in particular A-174, e.g. commercialized by Union Carbide, can be mentioned. These agents can also act as film-forming agents, described hereinunder. The polymeric dispersants are for instance described in **UK patents 1,493,393**, **UK 1,328,136**, **EP 321193**.

The molecular weight of the polymeric dispersants can be regulated if desired by introducing molecular weight regulators, for instance mercaptanes, terpenes, etc., in amounts comprised between 0.01 and 1% by weight. The intrinsic viscosity η of the polymeric dispersants is preferably comprised between 20 and 300 l/g. Other additives f) are latent solvents to regulate the formation of the colored coating; polymerization inhibitors of the type usually employed of acrylic monomers, such as for instance hindered phenols, quinones, quinoethers; molecular weight regulators acting in the phase of the film formation by regulating the molecular weight of the film itself, such as for instance mercaptanes, terpenes, etc.; polymerization activators such as for instance cobalt-, calcium-, zinc-, manganese-, zirconium-, barium-, lead-, cerium-, selenium salts, as indicated hereinafter; surfactants as wetting agents for dyes and fillers, such as for instance alkylphenolethoxylates; diluents are the same of component a) (non polymerizable solvents). The film-forming agents of polymeric type are for instance acrylic copolymers containing monomers conferring elasticity to the copolymer, for instance polysiloxanes, MMA/AMA copolymers containing ethylhexyl(meth)acrylate, butyl(meth)acrylate, hexandiol-di(meth)acrylate, etc. The film-forming agents can contain polar groups for instance -OH, -COOH, -NH₂. The resulting copolymer is capable of giving films with good tensile (elastic) and mechanical properties. Other film-forming agents which can be cited are urethane resins, vinylacetate resins, cellulose acetate butyrate resins. The film-forming agents can be for instance used in amounts of 0.5-5% by weight, preferably < 5% by weight.

The crosslinking agents, which preferably are contained in the composition of the present invention, are monomers with two or more double bonds well known in the art, such as for instance ethylenglycoldimethacrylate (EGDM), tetraethylenglycoldimethacrylate (TEGDM), trimethylolpropanetrimethacrylate, etc..

The amount of crosslinking agent is the usual one in the art, generally between 0.05 and 4% by weight, preferably between 0.1 and 2% by weight.

The polymerizable composition to be utilized for the formation of the finished article is a fluid, stable, redisperseable and hardenable dispersion formed by at least a polymerizable liquid monomer, a finely subdivided mineral filler, a silanizing agent for the mineral filler, and an hydrolysis catalyst of the silanizing agent chosen e.g. from the ammonium salts of organic acids.

See for instance EP patent 321193. The viscosities obtained with said patent are very low and if higher viscosities are desired, a thickening polymer is added, for instance PMMA or a copolymer of MMA/ethyl or methyl acrylate.

The polymerizable monomers are preferably alkylic esters of the acrylic or methacrylic acid, wherein the alkylic group contains from 1 to 6 carbon atoms. Preferred example is methylmethacrylate alone or in admixture with other acrylic, vinylic or styrenic monomers, up to 50% by weight.

As comonomers, ethylmethacrylate, propylmethacrylate, styrene, etc., can be mentioned.

These polymerizable monomers are the same also utilizable as component a) of the colored composition.

The mineral fillers are inorganic substances having hydrophilic surfaces characterized by the presence of polar groups, preferably hydroxyl groups. Examples are amorphous or crystalline silica, cristobalite, alumina, alumina trihydrate, mineral silicates, oxides.

It is preferred that the fillers have a spheroidal or granular form, the employment of needle-shaped particles however not being excluded.

The fillers above mentioned are maintained stably dispersed in the polymerizable monomer by silanization of the surface.

Examples of silanes used for silanization are methyltriethoxysilane, gamma-methacryloxypropyltrimethoxysilane, vinyltriethoxysilane, etc.

The fluid polymerizable compositions here summarized are described in detail in EP patent 321193 herein incorporated by reference.

As examples of fluid polymerizable compositions utilizing polymeric dispersants are those for instance of UK patent 1493393 herein incorporated by reference.

The polymerizable fluid compositions generally have low viscosities, of the order of 100-1,000 cPoise, even though they can be utilized up to higher viscosities, generally of 2,000-5,000 cPoise. Preferably the viscosity ranges from 400 to 800 cPoise.

The colored compositions of the invention when applied to the mold surface give a layer which remains attached to the mold surface during the successive filling with the polymerizable fluid composition, becoming integral part of the molded article during the hardening of the polymerizable fluid composition.

The process for obtaining molded materials with colour contrast comprises therefore the application of the colored composition of the invention, containing the desired contrast colour on the desired mold surface, achievement of the coating and subsequent introduction of the polymerizable fluid composition to obtain the molded item.

To obtain the coating of the colour composition it is added, before applying to the mold surface, a polymerization initiator of radical type, as hereunder defined, of the same type as the one utilized for the polymerization of the polymerizable fluid dispersion to obtain the finished item.

The amounts of initiator are generally comprised between 0.01 and 2% of the total composition.

Also a polymerization accelerator can be used as an activator, as already described above, to increase the crosslinking rate. It can be cited for instance salts of carboxylic acids, among them fatty acids, (the well known metal soaps), octoates, acetylacetonates, naphthenates of cobalt, calcium, zirconium, barium, zinc, manganese, selenium, as already said above. The amount of activator ranges depending on the resin type and on the length and the kind of oil, generally expressed as metal per 100 parts of the siccative resin, is the following:

| | |
|---|---|
| - cobalt: | 0.002 - 0.05 |
| - calcium: | 0.04 - 0.2 |
| - lead: | 0.20 - 0.60 |
| - zinc: | 0.03 - 0.4 |
| - zirconium: | 0.02 - 0.30. |

During the polymerization, a molded finished item having the chosen surface parts colored is therefore obtained.

The polymerization of the polymerizable composition is carried out with initiators as said above, of radical type, for instance peroxides with decomposition temperatures near those of the mold on which the colored composition is applied.

The peroxides can be utilized also in admixture with each other, by using their different times of semitransformation (decomposition) in order to obtain a continuous polymerization in various temperature ranges.

The temperature is generally comprised between 50°C and 100°C.

Examples of peroxides are di(4-t.butylcyclohexyl)peroxydicarbonate, benzoylperoxide, etc.

The mold is maintained at high temperature during the coating process with the colored compositions and during the subsequent filling of the mold with the polymerizable fluid composition.

After hardening, the finished item is removed from the hot mold. The application of the colored composition for the production of the successive item is carried out immediately.

The colored compositions of the present invention have the advantage to be hardened in a relatively short time, it is sufficient to let the coating dry for about 5 min. after being sprayed, wherefore the filling operation with the polymerizable fluid composition can be very quick.

As already said the introduction of the polymerizable fluid composition does not cause any colour modification or washing away of the colored surface also in the point of higher speed, i.e. in the point of introduction of the polymerizable fluid composition.

The fillers and the polymerizable monomers of the colored compositions of the present invention are preferably the same of the polymerizable composition forming the finished item.

The following examples are given for illustrative purpose and are not limitative of the scope of the present invention.

### EXAMPLE 1

### Preparation of the colouring composition MMA/γ-methacryloxyprooyltrimethoxysilane copolymer (dispersing agent)

It was obtained by mass polymerization at T = 80°C with weight ratio 98:2, utilizing as molecular weight regulator octylbutylmercaptane (OBM) in amounts of 0.2% by weight and as polymerization initiator lauroyl peroxide (LAUROX) in amounts of 1% by weight, and subsequently finely milled.

The weight average molecular weight M_{w} was 100,000.

### Polysiloxane (film-forming agent)

In a 500 cc flask are added, under stirring, 100 g of gamma-methacryloxypropyltrimethoxysilane (silane A 174 of Union Carbide), 100 g of CH₃OH, 40 g of distilled water, 1 g of catalyst of isopropylamine.

It is reacted for 24 hours and the dense layer of polysiloxane is separated in a separatory funnel.

### MMA/methacrylic acid (AMA) copolymer (polymeric dispersant)

It was prepared by polymerization in aqueous suspension with weight ratio 98:2. The weight average molecular weight was 100,000.

### Preparation of the methacrylic syrup

In a 2 l glass reactor the following components are mixed under stirring for 5 hours until dissolution of the (co)polymers.

| | % by wt. |
|---|---|
| - inhibited MMA with 200 ppm of TOPANOL^{(R)} A (2,4-dimethyl-6-t.butylphenol) | 90 |
| - MMA copolymer/silane A 174 (prepared above) | 10 |

### Preparation of the colouring paste

In a 2 l vessel with a high speed dispenser TURRAX^{(R)} type the following coloring paste comprising the following components (in % by weight) is prepared by stirring for 10 minutes:

| | % by wt. |
|---|---|
| - BENASOL UR 58 resin of BENASEDO (urethane modified alkyd resin medium oil 55% by weight as oil length, at 50% by weight in xylene/butyl acetate) | 48 |
| - Nonylphenolethoxylate | 1 |
| - TiO₂ white (of REPI) | 5.4 |
| - Red 130 M iron oxide (of Bayer) | 8.1 |
| - Light yellow 6R iron oxide (of Bayer) | 35.66 |
| - Vulcan P Carbon Black (of Cabot) | 0.84 |
| - soy lecithin | 1. |

The obtained mixture is passed twice on a three cylinder refiner to improve the pigments dispersion.

### Preparation of the colouring dispersion

In a 5 l jar with ceramic balls the following additives in % by weight are mixed:

| | % by wt. |
|---|---|
| - MMA (containing 200 ppm of TOPANOL^{(R)}) | 37.84 |
| - polymethylmethacrylate (PMMA) Altuglas^{(R)} (beads 9E) | 2.54 |
| - AMA/MMA 2-98 copolymer (prepared above) | 0.67 |
| - terpinolene | 0.03 |
| - EGDM | 0.67 |
| - methacrylic syrup at 10% of A 174/MMA 2/98 (prepared above) | 10.0 |
| - polysiloxane (prepared above) | 1.89 |
| - coloring paste (prepared above) | 5.3 |
| - urethane modified alkyd resin UR 58 of Benasedo | 1.0 |
| - nonylphenolethoxylate (NFE) | 0.086 |
| - finely subdivided silica (SICRON^{(R)} B 800 of Sibelco) | 38.67 |
| - hydroxyethylmethacrylate (HEMA) | 1.0 |
| - trimethylolpropantrimethacrylate (TMPTM) | 0.2 |
| - zinc stearate | 0.1. |

The mixture is rolled for 16 hours, filtered and utilized for forming the colour contrast.

### Application test

60 g of paint obtained above are diluted with 12 g of a mixture of non polymerizable solvents (butyl acetate, butylcellosolve, Solvesso 100) and added with 1.0 g of PERKADOX^{(R)} 16 (bis-4-ter-butylcyclohexylperoxydicarbonate).

The paint is rolled for 15 minutes, it is then sprayed by aerograph with 0.7 mm nozzle on a part (male) of the nickel-plated mold, maintained at 80°C by water circulation. The spraying pressure is 2.5 atm. It is dried for 4 minutes.

The mold is then closed and filled with an acrylic dispersion having viscosity of 500 cPoise obtained according to the teaching of example 3 of EP Patent 321193, to which 0.6% by weight of PERKADOX^{(R)} 16 and 0.15 % of stearic acid have been added.

The temperatures of the mold male and female are respectively 80°C and 70°C, by water circulation.

The temperature is then increased, after 10', gradually to 90°C both for the male and for the female.

It is maintained for 20 minutes at this temperature, then the male is cooled by cold water circulation and the mold is opened.

The molded article consists in a parallepiped-shaped two bowls kitchen sink having cm 120 x 50 x 20 sizes and 8 mm thickness. It reports perfectly reproduced and incorporated the part of the contrast paint previously sprayed on the metal mold, without traces of washing off.

The colour results perfectly homogeneous in the surface part of molded article.

### EXAMPLE 2

Example 1 is repeated but by utilizing in the preparation of the coloring dispersion the following composition:

| | % by wt. |
|---|---|
| - MMA (containing 200 ppm of TOPANOL^{(R)}) | 48.18 |
| - polymethylmethacrylate (PMMA) Altuglas^{(R)} (beads 9E) | 2.82 |
| - AMA/MMA 2-98 copolymer (prepared above) | 0.91 |
| - terpinolene | 0.03 |
| - EGDM | 0.65 |
| - Silane A 174 | 0.09 |
| - coloring paste (prepared above) | 3.97 |
| - urethane modified alkyd resin UR 58 of Benasedo | 3.97 |
| - nonylphenolethoxylate (NFE) | 0.14 |
| - finely subdivided silica (SICRON^{(R)} B 800 of Sibelco) | 37.96 |
| - hydroxyethylmethacrylate (HEMA) | 0.98 |
| - trimethylolpropantrimethacrylate (TMPTM) | 0.2 |
| - zinc stearate | 0.1. |

By operating under the same conditions of Ex. 1 a sink of very good aesthetic aspect is obtained.

The results are equal to those of Example 1.

### EXAMPLE 3

Example 2 is repeated by reducing PERKADOX 16 to 0.6 g and by adding as crosslinking activators, expressed as metals for 100 parts of dry resin, the following metal soaps:
- Co:: 0.04
- Ca:: 0.06
- Pb:: 0.3.

The results are equal to those of Example 1.

### COMPARATIVE EXAMPLE 4 (to be compared with Example 1)

Example 1 was repeated wherein a corresponding amount by weight of alkyd resin long-oil type SC 63 of the firm Benasedo (70% dry, in white spirit) was utilized instead of the urethane modified alkyd resin of Example 1, without aging the colored dispersion for 15 minutes with PERKADOX^{(R)} 16 (see Ex. 1 under application test, but adding PERKADOX^{(R)} 16 just before the use).

The application test on mold has pointed out in the contrast colored surface some points wherein the paint was not present.

These areas are near the inlet point of the polymerizable fluid composition.

With respect to the finished article of Example 1, this item cannot be used commercially.

### COMPARATIVE EXAMPLE 5 (to be compared with Example 1)

Example 4 was repeated but by utilizing a corresponding amount of epoxy resin (epoxyester resin) EPOBEN^{(R)} of Benasedo instead of the alkyd resin.

The application test has shown that it is not possible to obtain a colour contrast since the resin is washed off when the polymerizable fluid composition is introduced, the part of surface which was not washed off shows dishomogeneity.

## Claims

1. Molding process of articles having colour contrast areas on the surface comprising coating the surface or part of the surface of the mold with a polymerized colored composition before filling the mold with a polymerizable fluid composition wherein the colored composition is a fluid, stable and redispersable dispersion, which comprises:
a) polymerizable liquid monomers, optionally in admixture with a non-polymerizable volatile organic solvent, as a solvent;
b) from 0.1 to 10% by weight of a colouring composition as inorganic pigment or from 0.0001 to 1% by weight of a pigment or organic dye;
c) from 1 to 30% by weight of an urethane modified alkyd resin or urethane oil soluble in the solvent a) wherein the alkyd resin has un unsaturation of the fatty acid measured as iodine value higher than or equal to 50; and the colored composition is added with the polymerization initiator of radical type and aged for at least 10',
the component a) being at least 20% by weight of the total composition.

2. Molding process of articles having colour contrast areas according to claim 1 wherein the ageing is carried out for at least 15'.

3. Molding process of articles having colour contrast areas according to claims 1-2 wherein the composition optionally comprises one or more of the following components:
d) from 5 to 70% by weight on the total composition of a finely subdivided filler, having an average diameter from 0.5 to 10 micron, preferably from 2 to 6 micron;
e) a polymeric viscosity regulator soluble in the solvent a) in concentrations from 0.1 to 20% by weight,
f) other polymeric or non polymeric additives in amounts < 5% by weight on the total of the components acting as dispersants of the filler d), diluents, latent solvents, polymerization inhibitors, molecular weight regulators, polymerization activators, surfactants; film-forming agents; crosslinking agents.

4. Molding process of articles having colour contrast areas according to claims 1-3, wherein:
a) is from 30 to 60% by weight;
b) is from 2 to 6% by weight in case of inorganic pigments and from 0.01 to 0.5% by weight in case of organic pigments;
c) is from 1.5 to 10% by weight.
d) is from 20 to 50% by weight;
e) is from 1 to 10% by weight.

5. Molding process of articles having colour contrast areas according to claims 1-4 wherein the filler has an average diameter from 0.5 to 10 micron.

6. Molding process of articles having colour contrast areas according to claims 1-5 wherein the iodine value is comprised between 100 and 250.

7. Molding process of articles having colour contrast areas according to claims 1-6 wherein the polymerizable composition has a viscosity comprised between 400 and 800 cPoise.
